# EUROPEAN PATENT SPECIFICATION

(11) **EP 3 412 548 B1**
(45) Date of publication and mention of the grant of the patent: **24.02.2021**
(21) Application number: 17206243.2
(22) Date of filing: 08.12.2017
(51) Int. Cl.: B62K 5/00, B62K 5/025, B62K 5/10

(54) **VEHICULAR MULTI-LINK TILT MECHANISM**
MEHRFACHVERBINDUNG NEIGUNGSVERSTELLMECHANISMUS FÜR FAHRZEUG
MÉCANISME DE VÉHICULE INCLINABLE À LIAISONS MULTIPLES

(30) Priority: 06.06.2017 TW 106118698
(43) Date of publication of application: 12.12.2018
(73) Proprietor: Li Yuan Transmission Co., Ltd., Nantou County (TW)
(72) Inventor: Ko, Keng-Yu, Nantou County (TW); Liu, Chin-Chuan, Nantou County (TW)
(74) Representative: Lang, Christian

(56) References cited:
- WO-A1-2005/120939
- FR-A1- 2 986 497
- JP-A- 2017 095 088
- US-A- 3 504 934
- US-B1- 8 070 172

## Description

### BACKGROUND

### 1. Technical Field

The present invention relates to a mechanism for a tricycle and, more particularly, to a vehicular multi-link tilt back mechanism mounted to a tricycle frame to help returning of the tricycle to an upright position after inward inclination during turning.

### 2. Description of the Related Art

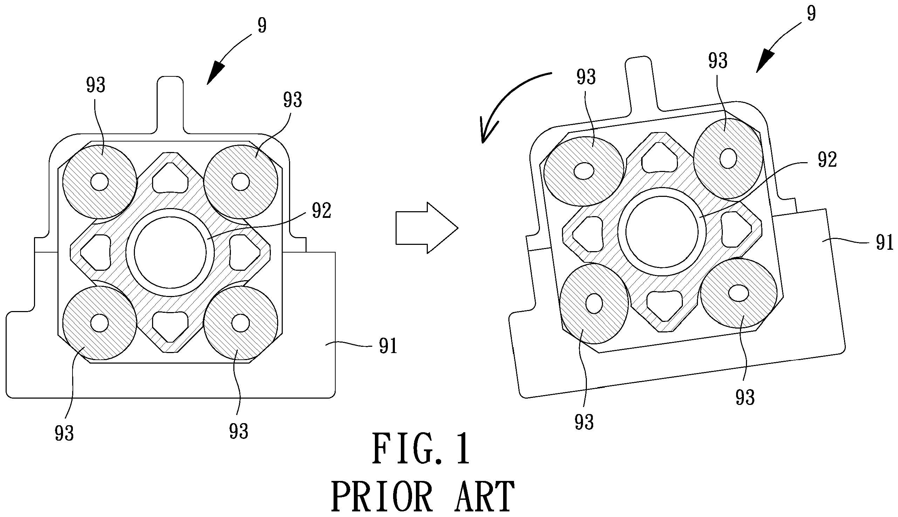

FIG. 1 shows a conventional vehicular tilt back mechanism 9 including a rotary member 91 fixed to a front frame of a tricycle and an axle 92 fixed to a rear frame of the tricycle. The rotary member 91 is rotatably mounted around an end of the axle 92. The vehicular tilt back mechanism 9 further includes a plurality of elastomeric members 93 mounted between an inner periphery of the rotary member 91 and an outer periphery of the axle 92.

When the tricycle is turning, the rotary member 91 pivots relative to the axle 92 to compress the elastomeric members 93 to thereby avoid tumbling of the tricycle. After turning, the elastomeric members 93 provide an elastic returning effect to pivot the rotary member 91 relative to the axle 92 in a reverse direction to an upright position.

However, the elastomeric members 93, generally made of an elastomeric material such as rubber, are unstable with respect to variations in temperature and pH value. Thus, the elastomeric members 93 deteriorates in the elastomericity or even breaks and/or malfunctions after a period of time, requiring frequent periodic maintenance. However, the elastomeric members 93 continue to downgrade in the front frame returning effect even during the maintenance period. In cases that aging of the elastomeric members 93 is accelerated due to a change in the environment, the front frame cannot be reliably returned to the upright position before maintenance of the elastomeric members 93 and replacement of new elastomeric members 93, leading to the risk of tumbling. Thus, the safety risks are incurred.

In view of the above, improvement to conventional vehicular tilt back mechanisms is necessary.

Patent application publication FR 2986497 A1 discloses a frame arrangement for a tricycle having the following features of claim 1: a vehicular multi-link tilt back mechanism configured to be mounted to a rear frame and a front frame of a tricycle, with the rear frame spaced from the front frame along a longitudinal axis, with the vehicular multi-link tilt back mechanism comprising: an axle fixed to the rear frame and extending along the longitudinal axis; a rotary member fixed to the front frame, wherein the rotary member is rotatably mounted around the axle, wherein the rotary member and the front frame of the tricycle are jointly pivotable about the longitudinal axis relative to the rear frame; a right link unit connected between the rear frame and a right side of the rotary member, wherein the right link unit includes a right cushioning member; and a left link unit connected between the rear frame and a left side of the rotary member, wherein the left link unit includes a left cushioning member, wherein when the rotary member is in an original, non-tilt position relative to the rear frame, the right and left link units are not actuated, wherein when the tricycle is turning rightward, the rotary member and the front frame jointly pivot rightward about the longitudinal axis relative to the rear frame, the right cushioning member is actuated to reduce a rightward and inward speed of the rotary member and the front frame, and wherein when the tricycle is turning leftward, the rotary member and the front frame jointly pivot leftward about the longitudinal axis relative to the rear frame, the left cushioning member is actuated to reduce a leftward and inward speed of the rotary member and the front frame, wherein the right link unit further includes a first link and a second link, wherein the first link includes a first end pivotably and directly connected to the rear frame and a second end pivotably and directly connected to a first end of the right cushioning member, wherein the second link includes a first end pivotably connected between the first and second ends of the first link, wherein the second link further includes a second end pivotably connected to the rotary member, and wherein the right cushioning member further includes a second end pivotably connected to the rear frame, wherein the left link unit further includes a third link and a fourth link, wherein the third link includes a first end pivotably and directly connected to the rear frame and a second end pivotably and directly connected to a first end of the left cushioning member, wherein the fourth link includes a first end pivotably connected between the first and second ends of the third link, wherein the fourth link further includes a second end pivotably connected to the rotary member, and wherein the left cushioning member further includes a second end pivotably connected to the rear frame. From patent specification US 3504934 A and patent application publication WO 2005/120939 A1 further tricycle frames are known.

### SUMMARY

An objective of the present invention is to provide a vehicular multi-link tilt back mechanism using a high-strength mechanical linkage structure to return the front frame, and the inclining force of the front frame can be converted into a force compressing a cushioning member, such that the vehicular multi-link tilt back mechanism is difficult to damage and is durable.

When the terms "front", "rear", "left", "right", "up", "down", "inner", "outer", "longitudinal", "transverse", "leftward", "rightward", "inward", and similar terms are used herein, it should be understood that these terms have reference only to the structure shown in the drawings as it would appear to a person viewing the drawings and are utilized only to facilitate describing the invention, rather than restricting the invention.

In order to achieve said objective the present invention provides a vehicular multi-link tilt back mechanism for a tricycle having the features of claim 1. Further embodiments are subject-matter of the dependent claims. The vehicular multi-link tilt back mechanism according to the present invention is configured to be mounted to a rear frame and a front frame of a tricycle. The rear frame is spaced from the front frame along a longitudinal axis. The vehicular multi-link tilt back mechanism includes an axle fixed to the rear frame and extending along the longitudinal axis. A rotary member is fixed to the front frame. The rotary member is rotatably mounted around the axle. The rotary member and the front frame of the tricycle are jointly pivotable about the longitudinal axis relative to the rear frame. Furthermore, a right link unit is connected between the rear frame and a right side of the rotary member. The right link unit includes a right cushioning member. A left link unit is connected between the rear frame and a left side of the rotary member. The left link unit includes a left cushioning member.

When the rotary member is in an original, non-tilt position relative to the rear frame, the right and left link units are not actuated. When the tricycle is turning rightward, the rotary member and the front frame jointly pivot rightward about the longitudinal axis relative to the rear frame, and the right cushioning member is actuated to reduce a rightward and inward speed of the rotary member and the front frame. When the tricycle is turning leftward, the rotary member and the front frame jointly pivot leftward about the longitudinal axis relative to the rear frame, and the left cushioning member is actuated to reduce a leftward and inward speed of the rotary member and the front frame.

Thus, the vehicular multi-link tilt back mechanism according to the present invention uses a high-strength mechanical linkage structure to return the front frame while maintaining driving stability of the tricycle and avoiding free swaying of the rear frame. Furthermore, the vehicular multi-link tilt back mechanism avoids tumbling of the front frame when the driver is leaving the tricycle. Of more importance, the inclining force of the front frame can be converted by the vehicular multi-link tilt back mechanism into a force compressing the left cushioning member or the right cushioning member, such that each component of the right link unit and the left link unit maintains a good force-receiving status and is less easily to fatigue, prolonging the service life of each component. Thus, the vehicular multi-link tilt back mechanism operates excellently, is durable, provides use convenience, increases use safety, and reduces the maintenance costs.

In the preferred embodiment, the right link unit further includes a first link and a second link. The first link includes a first end pivotably connected to the rear frame and a second end pivotably connected to a first end of the right cushioning member. The second link includes a first end pivotably connected between the first and second ends of the first link. The second link further includes a second end pivotably connected to the rotary member. The right cushioning member further includes a second end pivotably connected to the rear frame. The structure is simple and easy to manufacture and assemble, reducing the manufacturing and assembling costs.

In an example, when the rotary member is in the original, non-tilt position relative to the rear frame, the first end and the second end of the right cushioning member are respectively at the innermost side and the outermost side of the right link unit in a transverse direction perpendicular to the longitudinal axis. This assures smooth compressing of the right cushioning member.

In an example, the first link further includes a bend between the first and second ends thereof. The first and second ends of the first link are not connected rectilinearly, and the first end of the second link is pivotably connected to the bend of the first link. The structure is simple and easy to manufacture and assemble, reducing the manufacturing and assembling costs.

In an example, the second end of the second link is located between the first end of the right cushioning member and the bend of the first link in the transverse direction perpendicular to the longitudinal axis. This assures smooth compressing of the right cushioning member.

In an example, the right link unit further includes an elastic element mounted around the right cushioning member. This increases smooth returning of the front frame.

In the preferred embodiment, the left link unit further includes a third link and a fourth link. The third link includes a first end pivotably connected to the rear frame and a second end pivotably connected to a first end of the left cushioning member. The fourth link includes a first end pivotably connected between the first and second ends of the third link. The fourth link further includes a second end pivotably connected to the rotary member. The left cushioning member further includes a second end pivotably connected to the rear frame. The structure is simple and easy to manufacture and assemble, reducing the manufacturing and assembling costs.

In an example, when the rotary member is in the original, non-tilt position relative to the rear frame, the first end and the second end of the left cushioning member are respectively at the innermost side and the outermost side of the left link unit in the transverse direction perpendicular to the longitudinal axis. This assures smooth compressing of the left cushioning member.

In an example, the third link further includes a bend between the first and second ends thereof. The first and second ends of the third link are not connected rectilinearly, and the first end of the fourth link is pivotably connected to the bend of the third link. The structure is simple and easy to manufacture and assemble, reducing the manufacturing and assembling costs.

In an example, the second end of the fourth link is located between the first end of the left cushioning member and the bend of the third link in the transverse direction perpendicular to the longitudinal axis. This assures smooth compressing of the left cushioning member.

In an example, the left link unit further includes an elastic element mounted around the left cushioning member. This increases smooth returning of the front frame.

The present invention will become clearer in light of the following detailed description of illustrative embodiments of this invention described in connection with the drawings.

### BRIEF DESCRIPTION OF THE DRAWINGS

FIG. 1 is a diagrammatic cross sectional view of a conventional vehicular tilt back mechanism.
FIG. 2 is a perspective view of a tricycle including a vehicular multi-link tilt back mechanism of an embodiment according to the present invention.
FIG. 3 is a partial, perspective view of the tricycle of FIG. 2.
FIG. 4 is a cross sectional view of the tricycle of FIG. 3.
FIG. 5 is a view similar to FIG. 4, illustrating leftward inclination of a front frame of the tricycle.
FIG. 6 is a diagrammatic view illustrating operation of the vehicular multi-link tilt back mechanism during the leftward inclination, with the dashed lines representing a rotary member and a plurality of links before inclination of the front frame, and with dot-dashed lines representing the rotary member and the plurality of links after leftward inclination of the front frame.

### DETAILED DESCRIPTION

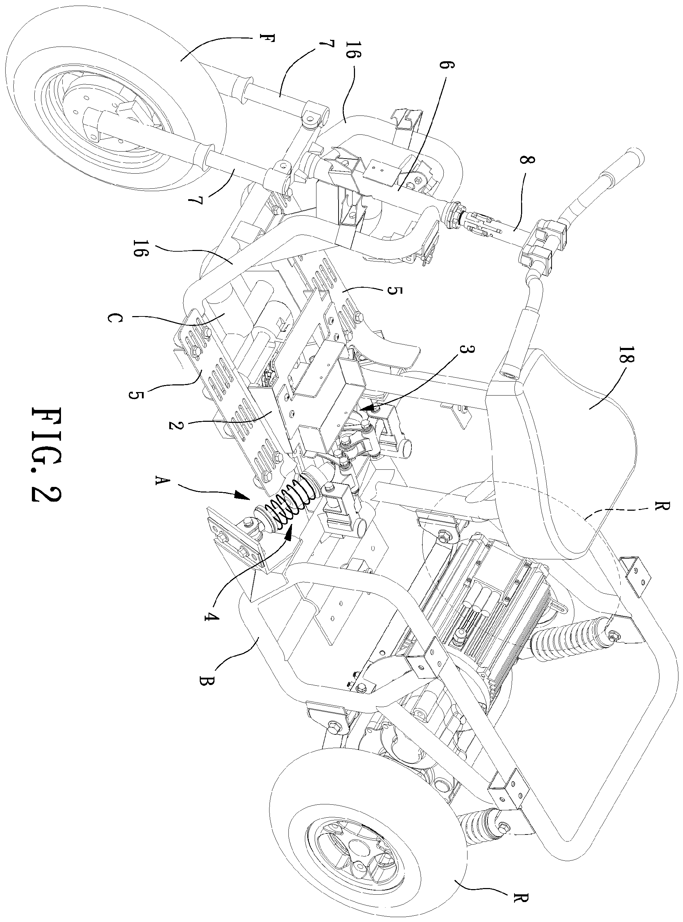

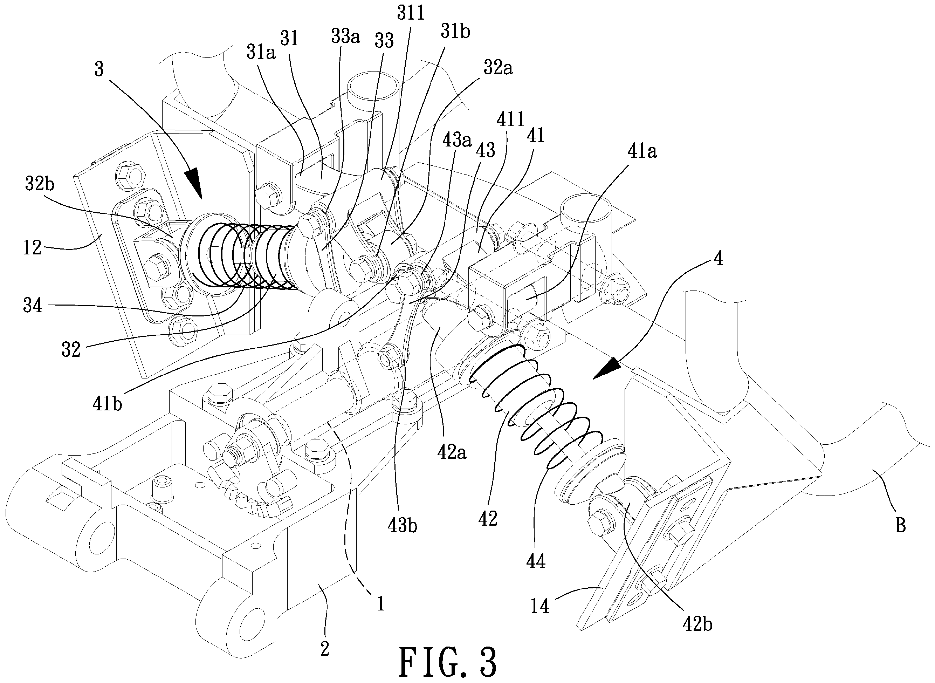

With reference to FIGS. 2 and 3, a vehicular multi-link tilt back mechanism A of an embodiment according to the present invention can be mounted to a rear frame B and a front frame C of a tricycle. The rear frame B is spaced from the front frame C along a longitudinal axis X. In an example shown, the tricycle includes two rear wheels R mounted to the rear frame B. The front frame C includes two floor portions 5 supported by frame extensions of the front frame C. The tricycle further includes a head tube 6 connected to the frame extensions by two connecting rods 16. The tricycle further includes a front fork 7 to which a front wheel F is rotatably mounted. A handlebar 8 is rotatably received in the head tube 6 and is connected to the front fork 7. The tricycle further includes a seat 18 fixed to the front frame C. It can be appreciated that the tricycle of other types can be used.

The vehicular multi-link tilt back mechanism A generally includes an axle 1, a rotary member 2, a right link unit 3, and a left link unit 4. The axle 1 is fixed to the rear frame B and extends along the longitudinal axis X. The rotary member 2 is fixed to the front frame C and is rotatably mounted around the axle 1. Thus, the rotary member 2 and the front frame C of the tricycle are jointly pivotable about the longitudinal axis X relative to the rear frame B. The right link unit 3 is connected between the rear frame B and a right side of the rotary member 2. In this embodiment, the right link unit 3 is connected between the right side of the rotary member 2 and a bracket 12 fixed to a right side of the rear frame B. The left link unit 4 is connected between the rear frame B and a left side of the rotary member 2. In this embodiment, the left link unit 4 is connected between the left side of the rotary member 2 and a bracket 14 fixed to a left side of the rear frame B.

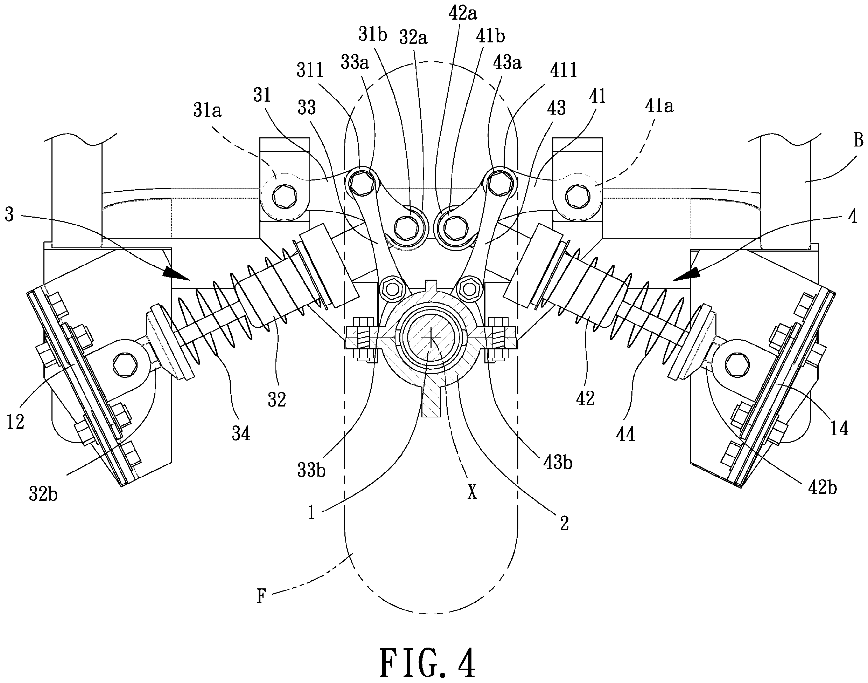

With reference to FIGS. 3 and 4, the axle 1 is substantially fixed to a central portion of the rear frame B. The rotary member 2 is rotatably mounted around an end of the axle 1 distant to the rear frame B. The outlines and detailed structures of the axle 1 and the rotary member 2 can be adjusted and modified according to the user needs and, thus, should not be limited to the embodiment shown, which can be appreciated by one having ordinary skill in the art.

The right link unit 3 includes a first link 31, a right cushioning member 32, and a second link 33. In this embodiment, the first link 31 includes a first end 31a pivotably connected to the right side of the rear frame B and a second end 31b pivotably connected to a first end 32a of the right cushioning member 32. The first link 31 further includes a bend 311 between the first and second ends 31a and 31b thereof. The first and second ends 31a and 31b of the first link 31 are not connected rectilinearly and have a fixed spacing therebetween. A first end 33a of the second link 33 is pivotably connected to the bend 311 of the first link 31. A second end 33b of the second link 33 is pivotably connected to the rotary member 2. The right cushioning member 32 further includes a second end 32b pivotably connected to the bracket 12 at the right side of the rear frame B.

The first link 31 and the second link 33 can be made of a material with a high strength, such as an aluminum alloy or a composite material, which is more stable to temperature and pH value than rubber material. The right cushioning member 32 can be a damper. An elastic element 34, such as a compression spring, can be mounted around the right cushioning member 32 to reduce the inward speed of the right cushioning member 32 during turning, avoiding discomfort resulting from fast inward movement of the front frame C during turning. Furthermore, the elastic element 34 provides a returning force for the compressed right cushioning member 32. Thus, tumbling of the tricycle during turning can be avoided. When the rotary member 2 and the front frame C are in an original, non-tilt position relative to the rear frame B, the right and left link units 3 and 4 are not actuated. In this case, the first end 32a and the second end 32b of the right cushioning member 32 are respectively at the innermost side and the outermost side of the right link unit 3 in a transverse direction perpendicular to the longitudinal axis X. Furthermore, the second end 33b of the second link 33 is located between the first end 32a of the right cushioning member 32 and the bend 311 of the first link 31 in the transverse direction perpendicular to the longitudinal axis X.

The left link unit 4 includes a third link 41, a left cushioning member 42, and a fourth link 43. The third link 41 includes a first end 41a pivotably connected to a left side of the rear frame B and a second end 41b pivotably connected to a first end 42a of the left cushioning member 42. The third link 41 further includes a bend 411 between the first and second ends 41a and 41b thereof. The first and second ends 41a and 41b of the third link 41 are not connected rectilinearly and have a fixed spacing therebetween. The first end 43a of the fourth link 43 is pivotably connected to the bend 411 of the third link 41. The fourth link 43 includes a first end 43a pivotably connected to the bend 411 of the third link 41. The fourth link 43 further includes a second end 43b pivotably connected to the rotary member 2. The left cushioning member 42 further includes a second end 42b pivotably connected to the bracket 14 at the left side of the rear frame B.

The left cushioning member 42 can be a damper. An elastic element 44, such as a compression spring, can be mounted around the left cushioning member 42 to reduce the inward speed of the left cushioning member 42 during turning, avoiding discomfort resulting from fast inward movement of the front frame C during turning. Furthermore, the elastic element 44 provides a returning force for the compressed left cushioning member 42. Thus, tumbling of the tricycle during turning can be avoided. When the rotary member 2 and the front frame C are in the original, non-tilt position relative to the rear frame B, the first end 42a and the second end 42b of the left cushioning member 42 are respectively at the innermost side and the outermost side of the left link unit 4 in the transverse direction perpendicular to the longitudinal axis X. Furthermore, the fourth end 43b of the second link 43 is located between the first end 42a of the left cushioning member 42 and the bend 411 of the third link 41 in the transverse direction perpendicular to the longitudinal axis X.

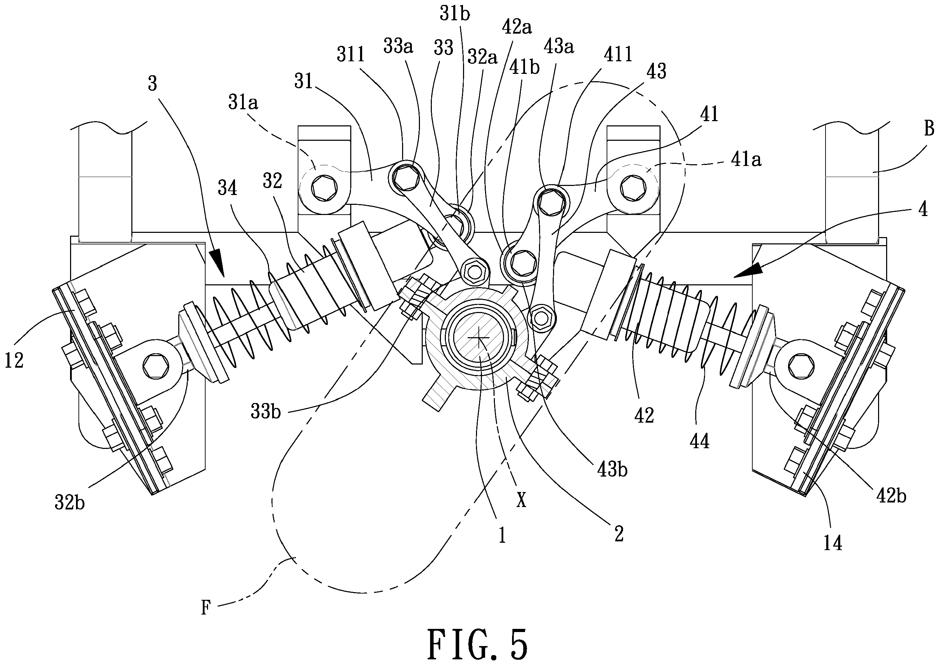

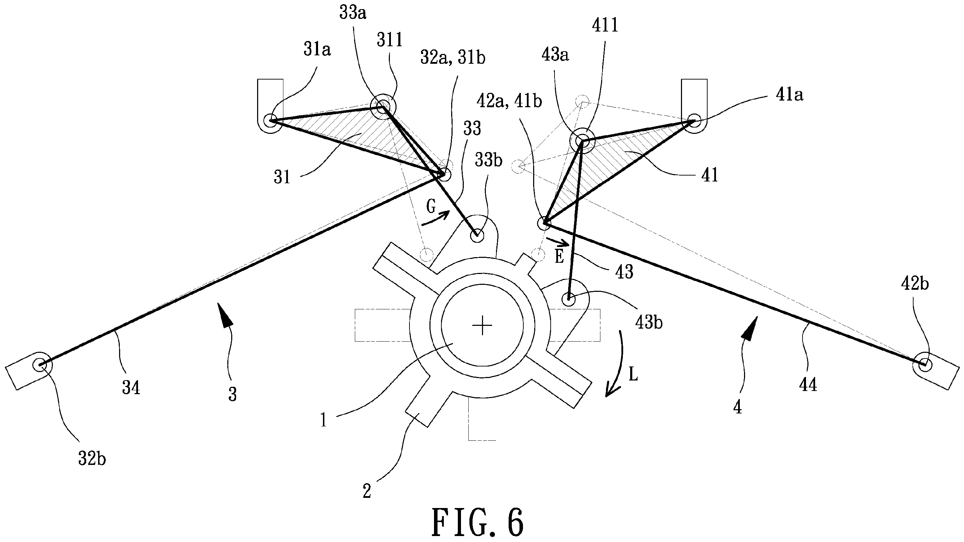

With reference to FIGS. 2 and 4-6, when the tricycle is turning rightward or leftward, the front frame C pivots (inclines) rightward or leftward relative to the rear frame B. In the example shown in FIGS. 5 and 6, when the tricycle is turning leftward (see arrow L in FIG. 6), the rotary member 2 and the front frame C jointly pivot leftward about the longitudinal axis C relative to the rear frame B, and the left cushioning member 42 is actuated to reduce a leftward and inward speed of the rotary member 2 and the front frame C. Specifically, the third link 43 moves downward and pivots in the counterclockwise direction (see arrow E in FIG. 6), which, in turn, causes downward pivotal movement of the third link 41 relative to the rear frame B under operation of the bend 411 of the third link 41. Thus, the second end 41b of the third link 41 compresses the left cushioning member 42 to reduce the leftward and inward speed. At the same time, the elastic element 44 is compressed to store the energy for returning the front frame C. The geometric arrangement of the left link unit 4 is so designed that when the front frame C inclines leftward and compresses the left cushioning member 42 and the elastic element 44, the right cushioning member 32 and the elastic element 34 of the right link unit 3 remains approximately the same arrangement as that in the upright position of the front frame C (neither compressed nor stretched). This reduces mutual influence and interference of the returning forces provided by the left cushioning member 42 and the right cushioning member 32, improving the returning function of the front frame C.

When the front frame C inclines leftward, the second link 33 of the right link unit 3 moves upward and pivots in the counterclockwise direction (see arrow G in FIG. 6). Then, the bend 311 of the first link 311 causes the first link 31 to move upward and to pivot in the counterclockwise direction.

On the other hand, when the tricycle is turning rightward, the rotary member 2 and the front frame C jointly pivot rightward about the longitudinal axis C relative to the rear frame B, and the right cushioning member 32 is actuated to reduce a rightward and inward speed of the rotary member 2 and the front frame C. Operation of the left link unit 4 is symmetric to that of the right link unit 3.

In view of the foregoing, the vehicular multi-link tilt back mechanism A according to the present invention uses a high-strength mechanical linkage structure to return the front frame C while maintaining driving stability of the tricycle and avoiding free swaying of the rear frame B. Furthermore, the vehicular multi-link tilt back mechanism A avoids tumbling of the front frame C when the driver is leaving the tricycle. Of more importance, the inclining force of the front frame C can be converted by the vehicular multi-link tilt back mechanism A into a force compressing the left cushioning member 42 or the right cushioning member 32, such that each component of the right link unit 3 and the left link unit 4 maintains a good force-receiving status and is less easily to fatigue, prolonging the service life of each component. Thus, the vehicular multi-link tilt back mechanism A operates excellently, is durable, provides use convenience, increases use safety, and reduces the maintenance costs.

## Claims

1. A vehicular multi-link tilt back mechanism (A) configured to be mounted to a rear frame (B) and a front frame (C) of a tricycle, with the rear frame (B) spaced from the front frame (C) along a longitudinal axis (X), with the vehicular multi-link tilt back mechanism (A) comprising:
an axle (1) fixed to the rear frame (B) and extending along the longitudinal axis (X);
a rotary member (2) fixed to the front frame (C), wherein the rotary member (2) is rotatably mounted around the axle (1), wherein the rotary member (2) and the front frame (C) of the tricycle are jointly pivotable about the longitudinal axis (X) relative to the rear frame (B);
a right link unit (3) connected between the rear frame (B) and a right side of the rotary member (2), wherein the right link unit (3) includes a right cushioning member (32); and
a left link unit (4) connected between the rear frame (B) and a left side of the rotary member (2), wherein the left link unit (4) includes a left cushioning member (42),
wherein when the rotary member (2) is in an original, non-tilt position relative to the rear frame (B), the right and left link units (3, 4) are not actuated,
wherein when the tricycle is turning rightward, the rotary member (2) and the front frame (C) jointly pivot rightward about the longitudinal axis (X) relative to the rear frame (B), the right cushioning member (32) is actuated to reduce a rightward and inward speed of the rotary member (2) and the front frame (C), and
wherein when the tricycle is turning leftward, the rotary member (2) and the front frame (C) jointly pivot leftward about the longitudinal axis (X) relative to the rear frame (B), the left cushioning member (42) is actuated to reduce a leftward and inward speed of the rotary member (2) and the front frame (C),
wherein
the right link unit (3) further includes a first link (31) and a second link (33), wherein the first link (31) includes a first end (31a) pivotably and directly connected to the rear frame (B) and a second end (31b) pivotably and directly connected to a first end (32a) of the right cushioning member (32), wherein the second link (33) includes a first end (33a) pivotably and directly connected between the first and second ends (31a, 31b) of the first link (31), wherein the second link (33) further includes a second end (33b) pivotably and directly connected to the rotary member (2), and wherein the right cushioning member (32) further includes a second end (32b) pivotably connected to the rear frame (B),
wherein the left link unit (4) further includes a third link (41) and a fourth link (43), wherein the third link (41) includes a first end (41a) pivotably and directly connected to the rear frame (B) and a second end (41b) pivotably and directly connected to a first end (42a) of the left cushioning member (42), wherein the fourth link (43) includes a first end (43a) pivotably and directly connected between the first and second ends (41a, 41b) of the third link (41), wherein the fourth link (43) further includes a second end (43b) pivotably and directly connected to the rotary member (2), and wherein the left cushioning member (42) further includes a second end (42b) pivotably connected to the rear frame (B).

2. The vehicular multi-link tilt back mechanism (A) as claimed in claim 1, **characterized in that** when the rotary member (2) is in the original, non-tilt position relative to the rear frame (B), the first end (32a) and the second end (32b) of the right cushioning member (32) are respectively at an innermost side and an outermost side of the right link unit (3) in a transverse direction perpendicular to the longitudinal axis (X).

3. The vehicular multi-link tilt back mechanism (A) as claimed in claim 2, **characterized in that** the first link (31) further includes a bend (311) between the first and second ends (31a, 31b) thereof, wherein the first and second ends (31a, 31b) of the first link (31) are not connected rectilinearly, and wherein the first end (33a) of the second link (33) is pivotably connected to the bend (311) of the first link (31).

4. The vehicular multi-link tilt back mechanism (A) as claimed in claim 3, **characterized in that** the second end (33b) of the second link (33) is located between the first end (32a) of the right cushioning member (32) and the bend (311) of the first link (31) in the transverse direction perpendicular to the longitudinal axis (X).

5. The vehicular multi-link tilt back mechanism (A) as claimed in any one of claims 1-4, **characterized in that** the right link unit (3) further includes an elastic element (34) mounted around the right cushioning member (32).

6. The vehicular multi-link tilt back mechanism (A) as claimed in claim 1, **characterized in that** when the rotary member (2) is in the original, non-tilt position relative to the rear frame (B), the first end (42a) and the second end (42b) of the left cushioning member (42) are respectively at an innermost side and an outermost side of the left link unit (4) in the transverse direction perpendicular to the longitudinal axis (X).

7. The vehicular multi-link tilt back mechanism (A) as claimed in claim 6, **characterized in that** the third link (41) further includes a bend (411) between the first and second ends (41a, 41b) thereof, wherein the first and second ends (41a, 41b) of the third link (41) are not connected rectilinearly, and wherein the first end (43a) of the fourth link (43) is pivotably connected to the bend (411) of the third link (41).

8. The vehicular multi-link tilt back mechanism (A) as claimed in claim 7, **characterized in that** the second end (43b) of the fourth link (43) is located between the first end (42a) of the left cushioning member (42) and the bend (411) of the third link (41) in the transverse direction perpendicular to the longitudinal axis (X).

9. The vehicular multi-link tilt back mechanism (A) as claimed in any one of claims 1-8, **characterized in that** the left link unit (4) further includes an elastic element (44) mounted around the left cushioning member (42).

## Patentansprüche

1. Mehrgliedriger Rückkippmechanismus eines Fahrzeugs (A), der darauf ausgelegt ist, an einem hinteren Rahmen (B) und einem vorderen Rahmen (C) eines Dreirades montiert zu werden, wobei der hintere Rahmen (B) entlang einer longitudinalen Achse (X) von dem vorderen Rahmen (C) beabstandet ist, wobei der mehrgliedrige Rückkippmechanismus eines Fahrzeugs (A) umfasst:
eine Achse (1), die an dem hinteren Rahmen (B) befestigt ist und sich entlang der longitudinalen Achse (X) erstreckt,
ein Drehelement (2), das an dem vorderen Rahmen (C) befestigt ist, wobei das Drehelement (2) drehbar um die Achse (1) montiert ist, wobei das Drehelement (2) und der vordere Rahmen (C) des Dreirads gemeinsam um die longitudinale Achse (X) relativ zu dem hinteren Rahmen (B) schwenkbar sind,
eine rechte Verbindungseinheit (3), die zwischen dem hinteren Rahmen (B) und einer rechten Seite des Drehelements (2) angeschlossen ist, wobei die rechte Verbindungseinheit (3) ein rechtes Dämpfungselement (32) beinhaltet, und eine linke Verbindungseinheit (4), die zwischen dem hinteren Rahmen (B) und einer linken Seite des Drehelements (2) angeschlossen ist, wobei die linke Verbindungseinheit (4) ein linkes Dämpfungselement (42) beinhaltet, wobei, wenn das Drehelement (2) in einer ursprünglichen, nicht gekippten Position relativ zu dem hinteren Rahmen (B) ist, die rechten und linken Verbindungseinheiten (3, 4) nicht betätigt sind,
wobei, wenn sich das Dreirad nach rechts dreht, sich das Drehelement (2) und der vordere Rahmen (C) gemeinsam um die longitudinale Achse (X) relativ zu dem hinteren Rahmen (B) nach rechts drehen, wobei das rechte Dämpfungselement (32) betätigt wird, um eine nach rechts gerichtete und eine nach innen gerichtete Geschwindigkeit des Drehelements (2) und des vorderen Rahmens (C) zu reduzieren, und
wobei, wenn sich das Dreirad nach links dreht, sich das Drehelement (2) und der vordere Rahmen (C) gemeinsam um die longitudinale Achse (X) relativ zu dem hinteren Rahmen (B) nach links drehen, wobei das linke Dämpfungselement (42) betätigt wird, um eine nach links gerichtete und eine nach innen gerichtete Geschwindigkeit des Drehelements (2) und des vorderen Rahmens (C) zu reduzieren,
wobei die rechte Verbindungseinheit (3) ferner eine erste Verbindung (31) und eine zweite Verbindung (33) beinhaltet, wobei die erste Verbindung (31) ein erstes Ende (31a), das drehbar und direkt mit dem hinteren Rahmen (B) verbunden ist, und ein zweites Ende (31b) beinhaltet, das drehbar und direkt mit einem ersten Ende (32a) des rechten Dämpfungselements (32) verbunden ist, wobei die zweite Verbindung (33) ein erstes Ende (33a) beinhaltet, das drehbar und direkt zwischen den ersten und zweiten Enden (31a, 31b) der ersten Verbindung (31) angeschlossen ist, wobei die zweite Verbindung (33) ferner ein zweites Ende (33b) beinhaltet, das drehbar und direkt mit dem Drehelement (2) verbunden ist, und wobei das rechte Dämpfungselement (32) ferner ein zweites Ende (32b) beinhaltet, das drehbar mit dem hinteren Rahmen (B) verbunden ist,
wobei die linke Verbindungseinheit (4) ferner eine dritte Verbindung (41) und eine vierte Verbindung (43) beinhaltet, wobei die dritte Verbindung (41) ein erstes Ende (41a), das drehbar und direkt mit dem hinteren Rahmen (B) verbunden ist, und ein zweites Ende (41b) beinhaltet, das drehbar und direkt mit einem ersten Ende (42a) des linken Dämpfungselements (42) verbunden ist, wobei die vierte Verbindung (43) ein erstes Ende (43a) beinhaltet, das drehbar und direkt zwischen den ersten und zweiten Enden (41a, 41b) der dritten Verbindung (41) angeschlossen ist, wobei die vierte Verbindung (43) ferner ein zweites Ende (43b) beinhaltet, das drehbar und direkt mit dem Drehelement (2) verbunden ist, und wobei das linke Dämpfungselement (42) ferner ein zweites Ende (42b) beinhaltet, das drehbar mit dem hinteren Rahmen (B) verbunden ist.

2. Mehrgliedriger Rückkippmechanismus eines Fahrzeugs (A) gemäß Anspruch 1, **dadurch gekennzeichnet, dass**, wenn das Drehelement (2) in der ursprünglichen, nicht-gekippten Position relativ zu dem hinteren Rahmen (B) ist, das erste Ende (32a) und das zweite Ende (32b) des rechten Dämpfungselements (32) entsprechend an einer innersten Seite und einer äußersten Seite der rechten Verbindungseinheit (3) in einer Querrichtung senkrecht zu der longitudinalen Achse (X) sind.

3. Mehrgliedriger Rückkippmechanismus eines Fahrzeugs (A) gemäß Anspruch 2, **dadurch gekennzeichnet, dass** die erste Verbindung (31) ferner eine Krümmung (311) zwischen den ersten und zweiten Enden (31a, 31b) davon beinhaltet, wobei die ersten und zweiten Enden (31a, 31b) der ersten Verbindung (31) nicht geradlinig verbunden sind und wobei das erste Ende (33a) der zweiten Verbindung (33) drehbar mit der Krümmung (311) der ersten Verbindung (31) verbunden ist.

4. Mehrgliedriger Rückkippmechanismus eines Fahrzeugs (A) gemäß Anspruch 3, **dadurch gekennzeichnet, dass** das zweite Ende (33b) der zweiten Verbindung (33) zwischen dem ersten Ende (32a) des rechten Dämpfungselements (32) und der Krümmung (311) der ersten Verbindung (31) in der Querrichtung senkrecht zu der longitudinalen Achse (X) angeordnet ist.

5. Mehrgliedriger Rückkippmechanismus eines Fahrzeugs (A) gemäß einem der Ansprüche 1 bis 4, **dadurch gekennzeichnet, dass** die rechte Verbindungseinheit (3) ferner ein elastisches Element (34) beinhaltet, das um das rechte Dämpfungselement (32) montiert ist.

6. Mehrgliedriger Rückkippmechanismus eines Fahrzeugs (A) gemäß Anspruch 1, **dadurch gekennzeichnet, dass**, wenn das Drehelement (2) in der ursprünglichen, nicht-gekippten Position relativ zu dem hinteren Rahmen (B) ist, das erste Ende (42a) und das zweite Ende (42b) des linken Dämpfungselements (42) entsprechend an einer innersten Seite und einer äußersten Seite der linken Verbindungseinheit (4) in der Querrichtung senkrecht zu der longitudinalen Achse (X) sind.

7. Mehrgliedriger Rückkippmechanismus eines Fahrzeugs (A) gemäß Anspruch 6, **dadurch gekennzeichnet, dass** die dritte Verbindung (41) ferner eine Krümmung (411) zwischen den ersten und zweiten Enden (41a, 41b) davon beinhaltet, wobei die ersten und zweiten Enden (41a, 41b) der dritten Verbindung (41) nicht geradlinig verbunden sind und wobei das erste Ende (43a) der vierten Verbindung (43) drehbar mit der Krümmung (411) der dritten Verbindung (41) verbunden ist.

8. Mehrgliedriger Rückkippmechanismus eines Fahrzeugs (A) gemäß Anspruch 7, **dadurch gekennzeichnet, dass** das zweite Ende (43b) der vierten Verbindung (43) zwischen dem ersten Ende (42a) des linken Dämpfungselements (42) und der Krümmung (411) der dritten Verbindung (41) in der Querrichtung senkrecht zu der longitudinalen Achse (X) angeordnet ist.

9. Mehrgliedriger Rückkippmechanismus eines Fahrzeugs (A) gemäß einem der Ansprüche 1 bis 8, **dadurch gekennzeichnet, dass** die linke Verbindungseinheit (4) ferner ein elastisches Element (44) beinhaltet, das um das linke Dämpfungselement (42) montiert ist.

## Revendications

1. Mécanisme de véhicule à dossier inclinable à liaisons multiples (A) configuré pour être monté sur un cadre arrière (B) et un cadre avant (C) d'un tricycle, le cadre arrière (B) étant espacé du cadre avant (C) le long d'un axe longitudinal (X), le mécanisme de véhicule à dossier inclinable à liaisons multiples (A) comprenant:
un essieu (1) fixé au cadre arrière (B) et s'étendant le long de l'axe longitudinal (X);
un élément rotatif (2) fixé au cadre avant (C), dans lequel l'élément rotatif (2) est monté de manière à pouvoir tourner autour de l'essieu (1), dans lequel l'élément rotatif (2) et le cadre avant (C) du tricycle sont pivotants conjointement autour de l'axe longitudinal (X) par rapport au cadre arrière (B);
une unité de liaison droite (3) raccordée entre le cadre arrière (B) et un côté droit de l'élément rotatif (2), dans lequel l'unité de liaison droite (3) inclut un élément d'amortissement droit (32); et
une unité de liaison gauche (4) raccordée entre le cadre arrière (B) et un côté gauche de l'élément rotatif (2), dans lequel l'unité de liaison gauche (4) inclut un élément d'amortissement gauche (42),
dans lequel lorsque l'élément rotatif (2) est dans une position originale de non-inclinaison par rapport au cadre arrière (B), les unités de liaison droite et gauche (3, 4) ne sont pas actionnées,
dans lequel lorsque le tricycle tourne vers la droite, l'élément rotatif (2) et le cadre avant (C) pivotent conjointement vers la droite autour de l'axe longitudinal (X) par rapport au cadre arrière (B), l'élément d'amortissement droit (32) est actionné pour réduire une vitesse vers la droite et vers l'intérieur de l'élément rotatif (2) et le cadre avant (C), et
dans lequel lorsque le tricycle tourne vers la gauche, l'élément rotatif (2) et le cadre avant (C) pivotent conjointement vers la gauche autour de l'axe longitudinal (X) par rapport au cadre arrière (B), l'élément d'amortissement gauche (42) est actionné pour réduire une vitesse vers la gauche et vers l'intérieur de l'élément rotatif (2) et le cadre avant (C),
dans lequel l'unité de liaison droite (3) inclut en outre une première liaison (31) et une deuxième liaison (33), dans lequel la première liaison (31) inclut une première extrémité (31a) raccordée de manière pivotante et directe au cadre arrière (B) et une seconde extrémité (31b) raccordée de manière pivotante et directe à une première extrémité (32a) de l'élément d'amortissement droit (32), dans lequel la deuxième liaison (33) inclut une première extrémité (33a) raccordée de manière pivotante et directe entre les première et seconde extrémités (31a, 31b) de la première liaison (31), dans lequel la deuxième liaison (33) inclut en outre une seconde extrémité (33b) raccordée de manière pivotante et directe à l'élément rotatif (2), et dans lequel l'élément d'amortissement droit (32) inclut en outre une seconde extrémité (32b) raccordée de manière pivotante au cadre arrière (B),
dans lequel l'unité de liaison gauche (4) inclut en outre une troisième liaison (41) et une quatrième liaison (43), dans lequel la troisième liaison (41) inclut une première extrémité (41a) raccordée de manière pivotante et directe au cadre arrière (B) et une seconde extrémité (41b) raccordée de manière pivotante et directe à une première extrémité (42a) de l'élément d'amortissement gauche (42), dans lequel la quatrième liaison (43) inclut une première extrémité (43a) raccordée de manière pivotante et directe entre les première et seconde extrémités (41a, 41b) de la troisième liaison (41), dans lequel la quatrième liaison (43) inclut en outre une seconde extrémité (43b) raccordée de manière pivotante et directe à l'élément rotatif (2), et dans lequel l'élément d'amortissement gauche (42) inclut en outre une seconde extrémité (42b) raccordée de manière pivotante au cadre arrière (B).

2. Mécanisme de véhicule à dossier inclinable à liaisons multiples (A) selon la revendication 1, **caractérisé en ce que** lorsque l'élément rotatif (2) est dans la position originale de non-inclinaison par rapport au cadre arrière (B), la première extrémité (32a) et la seconde extrémité (32b) de l'élément d'amortissement droit (32) sont respectivement sur un côté le plus intérieur et un côté le plus extérieur de l'unité de liaison droite (3) dans une direction transversale perpendiculaire à l'axe longitudinal (X).

3. Mécanisme de véhicule à dossier inclinable à liaisons multiples (A) selon la revendication 2, **caractérisé en ce que** la première liaison (31) inclut en outre un coude (311) entre les première et seconde extrémités (31a, 31b) de celle-ci, dans lequel les première et seconde extrémités (31a, 31b) de la première liaison (31) ne sont pas raccordées de manière rectiligne, et dans lequel la première extrémité (33a) de la deuxième liaison (33) est raccordée de manière pivotante au coude (311) de la première liaison (31).

4. Mécanisme de véhicule à dossier inclinable à liaisons multiples (A) selon la revendication 3, **caractérisé en ce que** la seconde extrémité (33b) de la deuxième liaison (33) est située entre la première extrémité (32a) de l'élément d'amortissement droit (32) et le coude (311) de la première liaison (31) dans la direction transversale perpendiculaire à l'axe longitudinal (X).

5. Mécanisme de véhicule à dossier inclinable à liaisons multiples (A) selon l'une quelconque des revendications 1-4, **caractérisé en ce que** l'unité de liaison droite (3) inclut en outre un élément élastique (34) monté autour de l'élément d'amortissement droit (32).

6. Mécanisme de véhicule à dossier inclinable à liaisons multiples (A) selon la revendication 1, **caractérisé en ce que** lorsque l'élément rotatif (2) est dans la position originale de non-inclinaison par rapport au cadre arrière (B), la première extrémité (42a) et la seconde extrémité (42b) de l'élément d'amortissement gauche (42) sont respectivement sur un côté le plus intérieur et un côté le plus extérieur de l'unité de liaison gauche (4) dans la direction transversale perpendiculaire à l'axe longitudinal (X).

7. Mécanisme de véhicule à dossier inclinable à liaisons multiples (A) selon la revendication 6, **caractérisé en ce que** la troisième liaison (41) inclut en outre un coude (411) entre les première et seconde extrémités (41a, 41b) de celle-ci, dans lequel les première et seconde extrémités (41a, 41b) de la troisième liaison (41) ne sont pas raccordées de manière rectiligne, et dans lequel la première extrémité (43a) de la quatrième liaison (43) est raccordée de manière pivotante au coude (411) de la troisième liaison (41).

8. Mécanisme de véhicule à dossier inclinable à liaisons multiples (A) selon la revendication 7, **caractérisé en ce que** la seconde extrémité (43b) de la quatrième liaison (43) est située entre la première extrémité (42a) de l'élément d'amortissement gauche (42) et le coude (411) de la troisième liaison (41) dans la direction transversale perpendiculaire à l'axe longitudinal (X).

9. Mécanisme de véhicule à dossier inclinable à liaisons multiples (A) selon l'une quelconque des revendications 1-8, **caractérisé en ce que** l'unité de liaison gauche (4) inclut en outre un élément élastique (44) monté autour de l'élément d'amortissement gauche (42).
